# FASCICULE DE BREVET EUROPEEN

(11) **EP 0 575 645 B1**
(45) Date de publication et mention de la délivrance du brevet: **31.05.1995**
(21) Numéro de dépôt: 92110479.0
(22) Date de dépôt: 22.06.1992
(51) Int. Cl.: A47J 43/07

(54) **Pied de mixage destiné à émulsionner des liquides**
Mixstab geeignet zum Emulgieren von Flüssigkeiten
Domestic mixing device suitable for emulsifying liquids

(43) Date de publication de la demande: 29.12.1993
(73) Titulaire: MOULINEX, F-93170 Bagnolet (FR)
(72) Inventeur: Bouverie, Alain Paul Charles, F-50008 Saint-Lo (FR)
(74) Mandataire: May, Hans Ulrich, Dr.

(56) Documents cités:
- DE-B- 1 097 100
- DE-C- 584 394
- FR-A- 2 625 427
- FR-A- 2 677 896
- GB-A- 675 613
- PATENT ABSTRACTS OF JAPAN vol. 13, no. 95 (C-573)(3443) 6 Mars 1989 & JP-A-63 274 495 (SHIN MEIWA IND. CO. LTD.) 11 novembre 1988

## Description

L'invention se rapporte à un pied de mixage destiné à émulsionner des liquides et comprenant une garde tubulaire dont la partie supérieure est adaptée à être montée sur un bloc moteur et dont la partie inférieure comporte une cloche dont le sommet est traversé par un arbre rotatif disposé longitudinalement dans ladite garde, l'extrémité supérieure dudit arbre étant destinée à être entraînée à grande vitesse par des moyens motorisés, tandis que l'extrémité inférieure est solidaire en rotation d'un outil de mixage disposé dans la cloche transversalement audit arbre. En outre, ledit pied de mixage comporte un conduit d'amenée d'air s'étendant longitudinalement à la garde et dont une extrémité supérieure débouche dans la région supérieure de la garde tandis que l'extrémité inférieure débouche à proximité de l'outil de mixage.

Les pieds de mixage connus sont principalement utilisés pour broyer des matières alimentaires immergées dans un liquide, par exemple pour réaliser des potages de légumes. Un tel pied a été décrit, par exemple, dans la demande de brevet français FR-2 718 474. On connaît également le brevet allemand DE-B-1 097 100 décrivant un pied de mixage comportant un tube de fabrication de mousse. Le dispositif décrit dans ce dernier brevet ne permet pas d'obtenir une bonne émulsion dans la mesure où sa structure n'autorise pas une arrivée d'air de sa partie supérieure vers la partie inférieure où se trouve le produit à émulsionner.

L'invention a pour but d'apporter un perfectionnement aux pieds de mixage de manière à ce qu'ils puissent être utilisés également et efficacement pour réaliser des émulsions du type "milk-shake".

Selon l'invention, le conduit d'amenée d'air est monté à l'extérieur de la garde et son extrémité inférieure est coudée vers l'outil de mixage de manière à ce que son débouché soit situé pratiquement sous ledit outil de mixage.

Le pied de mixage ainsi équipé d'un tel conduit d'amenée d'air permet donc de réaliser rapidement des émulsions de liquides. En effet, la rotation de l'outil de mixage entraîne un courant de liquide qui provoque une dépression dans le conduit. L'air est donc aspiré sous la cloche et la rotation de l'outil produit un mélange air/liquide, provoquant l'émulsion.

Les caractéristiques et avantages de l'invention ressortiront d'ailleurs de la description qui va suivre, à titre d'exemple, en référence au dessin annexé dans lequel :

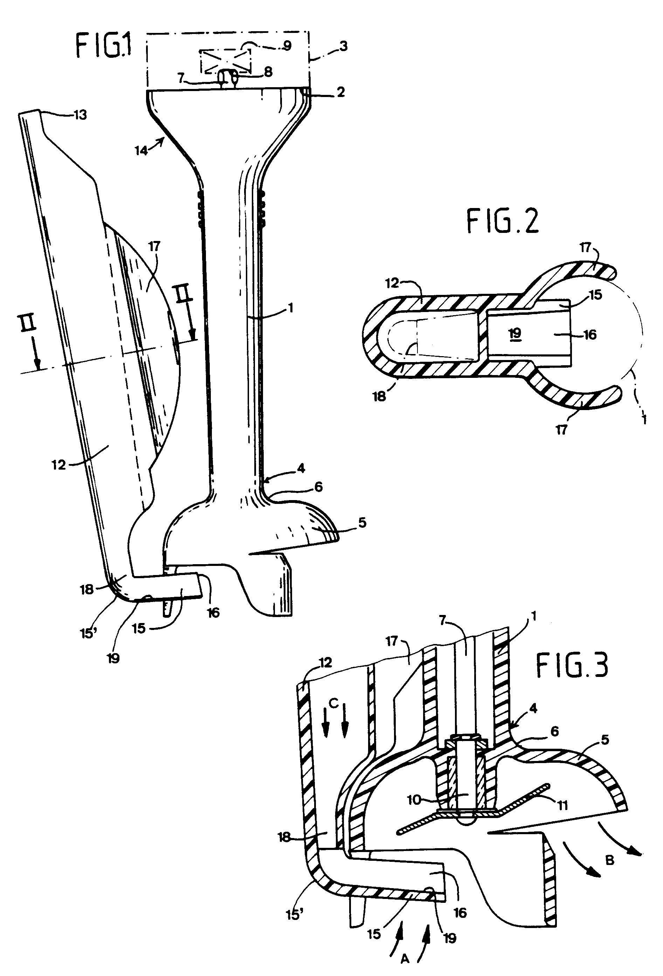

la figure 1 est une vue en élévation d'un pied de mixage et d'un conduit d'amenée d'air amovible selon l'invention et illustré avant d'être emboîté sur la garde ; la figure 2 représente à échelle agrandie une coupe transversale du conduit d'amenée d'air selon la ligne II.II de la figure 1 ; la figure 3 est une vue en coupe partielle verticale du pied de mixage équipé du conduit d'amenée d'air selon l'invention, à plus petite échelle que la figure 2.

Le pied de mixage, destiné à émulsionner des liquides et représenté sur les figures 1 à 3, comprend une garde tubulaire 1 dont la partie supérieure 2 est adaptée à être montée sur un bloc moteur 3 (représenté en traits interrompus) et dont la partie inférieure 4 comporte une cloche 5 dont le sommet 6 est traversé par un arbre rotatif 7 disposé longitudinalement dans ladite garde 1. L'extrémité supérieure 8 de l'arbre 7 est destinée à être entraînée à grande vitesse par des moyens motorisés 9 (représentés en traits interrompus), tandis que l'extrémité inférieure 10 est solidaire en rotation d'un outil de mixage 11 disposé dans la cloche 5 transversalement audit arbre 7. En outre, ledit pied de mixage comporte un conduit d'amenée d'air 12 s'étendant longitudinalement à la garde 1 et dont une extrémité supérieure 13 débouche dans la région supérieure 14 de la garde 1 tandis que l'extrémité inférieure 15 débouche à proximité de l'outil de mixage.
Selon l'invention, le conduit d'amenée d'air 12 est monté à l'extérieur de la garde 1 et son extrémité inférieure 15 est coudée vers l'outil de mixage 11 de manière à ce que son débouché 16 soit situé pratiquement sous l'outil de mixage 11.

La rotation de l'outil de mixage 11, d'une part, aspire le liquide sous la cloche 5 (selon les flèches A de la figure 3) pour ensuite le refouler (selon les flèches B de la figure 3), et, d'autre part, crée une dépression dans le conduit 12, provoquant ainsi un courant d'air (selon les flèches C de la figure 3) qui débouche sous la cloche 5. Il se produit alors un mélange air/liquide.

On aurait pu aussi disposer le conduit d'amenée d'air à l'intérieur de la garde (solution non représentée).

Selon une caractéristique particulièrement avantageuse de l'invention et comme on le voit mieux sur les figures 1 et 2, le conduit d'amenée d'air 12 est monté de manière amovible sur la garde 1 et comporte à cet effet deux ailes latérales 17 solidaires du conduit et destinées à venir s'emboîter de manière élastique sur la garde 1. L'amovibilité rend le nettoyage du conduit 12 plus aisé et surtout permet d'utiliser le pied de mixage soit sans le conduit, pour broyer, soit avec le conduit, pour émulsionner.

Comme on le voit mieux sur la figure 3, le conduit d'amenée d'air 12 comporte un rétrécissement 18 disposé à proximité du débouché inférieur 16 dudit conduit. Ce rétrécissement 18 a pour but d'augmenter la dépression dans le conduit 12 et ainsi d'améliorer la qualité de l'émulsion et de diminuer son temps de réalisation.

Par exemple, avec au départ un volume de 0.2 litre de lait, on réalise avec ce dispositif une émulsion de volume de 0.7 litre en 15 secondes.

Le débouché inférieur 16 se présente sous la forme d'un canal ouvert vers le haut s'étendant sur une partie du conduit 12 disposée sous la cloche 5. Cette forme particulière du débouché 16 permet d'augmenter l'étendue de sortie de l'air et d'obtenir une meilleure répartition de l'air sous l'outil 11. On obtient ainsi une meilleure homogénéisation de l'émulsion.

En outre, grâce à cette disposition, le fond 19 du canal 16 situé en amont dans le courant de liquide procure une protection contre un éventuel colmatage de la sortie d'air.

## Revendications

1. Pied de mixage destiné à émulsionner des liquides et comprenant une garde tubulaire (1) dont la partie supérieure (2) est adaptée à être montée sur un bloc moteur (3) et dont la partie inférieure (4) comporte une cloche (5) dont le sommet (6) est traversé par un arbre rotatif (7) disposé longitudinalement dans ladite garde (1), l'extrémité supérieure (8) de l'arbre (7) étant destinée à être entraînée à grande vitesse par des moyens motorisés (9), tandis que l'extrémité inférieure (10) est solidaire en rotation d'un outil de mixage (11) disposé dans la cloche (5) transversalement audit arbre (7), ledit pied de mixage comportant en outre un conduit d'amenée d'air (12) s'étendant longitudinalement à la garde (1) et dont une extrémité supérieure (13) débouche dans la région supérieure (14) de la garde (1) tandis que l'extrémité inférieure (15) débouche à proximité de l'outil de mixage,
caractérisé en ce que le conduit d'amenée d'air (12) est monté à l'extérieur de la garde et son extrémité inférieure (15) est coudée vers l'outil de mixage (11) de manière à ce que son débouché (16) soit situé pratiquement sous l'outil de mixage (11).

2. Pied de mixage selon la revendication 1,
caractérisé en ce que le débouché inférieur (16) se présente sous la forme d'un canal ouvert vers le haut s'étendant sur une partie du conduit (12) disposé sous la cloche (5).

3. Pied de mixage selon la revendication 2 ,
caractérisé en ce que le conduit d'amenée d'air (12) est monté de manière amovible sur la garde (1) et comporte à cet effet deux ailes latérales (17) destinées à venir s'emboîter de manière élastique sur la garde (1).

4. Pied de mixage selon la revendication 2 ou 3,
caractérisé en ce que le conduit d'amenée d'air (12) comporte un rétrécissement (18) disposé à proximité du débouché inférieur (16) dudit conduit.

## Claims

1. A hand blender suitable for emulsifying liquids and comprising a tubular guard (1), the upper part (2) of which is adapted to be mounted on a motor unit (3) and the lower part (4) of which comprises a bell (5), through the top (6) of which a rotating shaft (7) disposed longitudinally in the said guard (1) passes, the upper end (8) of the shaft (7) being suitable for being driven at high speed by motorized means (9), whereas the lower end (10) is rotationally integral with a blending tool (11) disposed in the bell (5) transversally to the said shaft (7), the said hand blender also comprising an air supply conduit (12) extending longitudinally to the guard (1) and an upper end (13) of which emerges into the upper region (14) of the guard (1) whereas the lower end (15) emerges close to the blending tool,
**characterised in that** the air supply conduit (12) is mounted on the outside of the guard and its lower end (15) is bent towards the blending tool (11) so that its outlet (16) is situated practically beneath the blending tool (11).

2. A hand blender according to Claim 1,
**characterised in that** the lower outlet (16) is in the form of an upwardly open channel extending over a part of the conduit (12) disposed beneath the bell (5).

3. A hand blender according to Claim 2,
**characterised in that** the air supply conduit (12) is removably mounted on the guard (1) and for this purpose comprises two lateral wings (17) suitable for coming to fit elastically over the guard (1).

4. A hand blender according to Claim 2 or 3,
**characterised in that** the air supply conduit (12) comprises a narrowed portion (18) disposed close to the lower outlet (16) of the said conduit.

## Patentansprüche

1. Mixervorsatz zum Emulgieren von Flüssigkeiten mit einem Schutzrohr (1), dessen oberer Teil (2) zur Montage an einem Getriebeblock (3) ausgebildet ist und dessen unterer Teil (4) eine Glocke (5) aufweist, deren Scheitelpunkt (6) von einer in Längsrichtung im Schutzrohr (1) angeordneten Antriebswelle (7) durchsetzt wird, wobei das obere Ende (8) der Antriebswelle (7) dazu bestimmt ist, mit großer Geschwindigkeit von einer Antriebsvorrichtung (9) angetrieben zu werden, während das untere Ende (10) mit einem in der Glocke (5) quer zur Welle (7) angeordneten Mixwerkzeug drehfest verbunden ist, der genannte Mixervorsatz ferner eine sich in Längsrichtung entlang des Schutzrohrs (1) erstreckende Luftzuleitung (12) aufweist, von der ein oberes Ende (13) im oberen Bereich (14) des Schutzrohrs (1) mündet, während das untere Ende (15) in der Nähe des Mixwerkzeugs mündet, **dadurch gekennzeichnet**, daß die Luftzuleitung (12) an der Außenseite des Schutzrohrs angebracht ist und ihr unteres Ende (15) so in Richtung des Mixwerkzeugs (11) abgeknickt ist, daß ihre Öffnung (16) praktisch unterhalb des Mixwerkzeugs (11) angeordnet ist.

2. Mixervorsatz gemäß Anspruch 1, **dadurch gekennzeichnet**, daß die untere Öffnung (16) in Form eines nach oben offenen, sich über einen unter der Glocke (5) angeordneten Teil der Luftzuleitung (12) erstreckenden Kanals ausgebildet ist.

3. Mixervorsatz gemäß Anspruch 2, dadurch gekennzeichnet, daß die Luftzuleitung (12) lösbar am Schutzrohr angebracht ist und zu diesem Zweck zwei seitliche Flügel (17) zum elastischen Anklemmen an das Schutzrohr (1) aufweist.

4. Mixervorsatz gemäß Anspruch 2 oder 3, dadurch gekennzeichnet, daß die Luftzuleitung (12) in der Nähe ihrer unteren Öffnung (16) eine Verengung (18) aufweist.
